# EUROPEAN PATENT SPECIFICATION

(11) **EP 2 546 094 B1**
(45) Date of publication and mention of the grant of the patent: **08.04.2020**
(21) Application number: 12187206.3
(22) Date of filing: 22.02.2011
(51) Int. Cl.: B60L 53/66

(54) **System, device and method for exchanging energy with an electric vehicle**
System, Vorrichtung und Verfahren zum Austauschen von Energie mit einem elektrischen Fahrzeug
Système, dispositif et procédé pour l'échange d'énergie avec un véhicule électrique

(30) Priority: 22.02.2010 NL 2004279
(43) Date of publication of application: 16.01.2013
(62) Divisional of application: 11706641.5
(73) Proprietor: ABB B.V., 3068 AX Rotterdam (NL)
(72) Inventor: Bouman, Crijn, 2593 XD Den Haag (NL)
(74) Representative: Patentwerk B.V.

(56) References cited:
- EP-A1- 2 112 758
- EP-A1- 2 173 018
- WO-A1-2006/132070
- DE-A1- 10 233 821
- US-A1- 2008 040 295
- US-A1- 2009 210 357
- OTA Y ET AL: "An autonomous distributed vehicle-to-grid control of grid-connected electric vehicle", INDUSTRIAL AND INFORMATION SYSTEMS (ICIIS), 2009 INTERNATIONAL CONFERENCE ON, IEEE, PISCATAWAY, NJ, USA, 28 December 2009 (2009-12-28), pages 414-418, XP031647922, ISBN: 978-1-4244-4836-4

## Description

The present invention relates to exchanging energy with electric vehicles. Electric vehicles may comprise road vehicles such as cars or motorcycles, vehicles for indoor use or use on sites, such as (fork lift) trucks, and even vehicles for transport on water, on railroad tracks or in air.

As a result of environmental awareness and limited organic fuel sources, interest in electric vehicles, i.e. vehicles comprising an electric engine for providing driving force, is growing. Electric vehicles have clear advantages, in high power efficiency when compared to vehicles with combustion engines, and they cause no polluting emission at their place of use. However, the radius of action may be limited in specific cases, and charging their batteries may - dependent on circumstances - be time consuming. Moreover, a lack of standardisation holds the placement of charging stations. Also, the treatment of batteries, especially charging and discharging circumstances, have a large impact on their cycle-life, and charging stations are usually not fit to cooperate with various batteries. Several solutions have been proposed to (partly) solve the above mentioned problems. The European Patent application EP 2 112 758 describes a system according to the preamble of claim 1. It is therefore a goal of the present invention to provide a system, device and method for exchanging energy with an electric device, that is beneficial with respect to the prior art, or at least forms a useful alternative thereto.

The invention therefore provides a system for exchanging energy with an electric vehicle, as defined in claim 1, comprising at least an energy exchange station, a data processing device, and a configuration device. The invention further provides a method for operating an energy exchange station according to claim 9.

The at least one energy exchange station comprises at least one port for exchanging energy with an energy source, at least one port for exchanging energy with a vehicle, at least one port for data communication with the vehicle, and at least one port for data communication with a data processing device.

The data processing device comprises at least one port for data communication with the energy exchange station, at least one port for data communication with at least one configuration device. In certain cases, these ports may be one and the same port, for example an internet connection of the data processing device.

The at least one configuration device comprises at least one port for exchanging data with the data processing device; and means, such as a user interface, for editing configuration details.

A port of the energy exchange station for exchanging energy with an energy source may comprise any kind of coupling that allows transfer of (electric) energy, such as a conductive coupler like a connector, a magnetic coupler or the like. The at least one port for exchanging energy with a vehicle may be an electric connection formed by (power) cables or for example a magnetic connection for inductive power transfer. The at least one port for data communication with the vehicle may be a connection for a communication line, a wireless data exchange means, or even an unidirectional communication means such as an RFID or barcode or magnetic code reader. The at least one port for data communication with a data processing device may be an internet connection, or a (dedicated) (phone) line, or other communication means.

The energy source may be a public or private power grid, a clean or renewable energy source like a wind energy source, solar panels, gravitational energy, energy delivered by an energy converter such as a heat exchanger, a battery, such as a pre-charged battery or even a battery from a vehicle different from the vehicle to be charged, for example to obtain a constant load of a grid. Exchanging power may be uni- or bidirectional, i.e. the use of the system may be restricted to charging batteries from it while delivering energy (back) to the energy source, or to charge a battery of a first vehicle from a battery of a second vehicle, or to discharge a battery for any reason, such as maintenance.

The communication port may be any means to transfer data, such as an internet connection, a telephone or telefax line, a VPN connection or a dedicated communication line, which may either be wired or wireless, or just a single or a few data lines for exchanging simple commands represented by binary values of the data lines, for example a start/stop signal. The communication can take place continuously or at predetermined intervals.

The data processing device maybe a dedicated computer device such as a PC or a (web) server, but also a group of interlinked computer devices, such as a computer network, wherein a plurality of computers may be used to increase computing power, to increase fidelity of the device, or to enable cloud computing. The data processing device may be coupled to or form part of any data network such as the internet or a private network such as a VPN. The database may be comprised by the same physical device or by a separate device at a remote location, and it may also be embodied by multiple databases, which may for example be split in a battery profile database and a configuration detail database.

In an embodiment, the system comprises memory means, for storing at least the configuration details and/or the battery profiles. Further data that may for example be stored are ID's and/or details regarding the grid, batteries, users, vehicles, chargers and power exchange stations.

The memory means may be embodied by RAM or by a (central) database, and can be located at the configuration device, at the data processing device or form a separate entity.

The use of a central database offers the advantage that data can be updated efficiently, and that various users of the system can make use of them. The system becomes especially beneficial as the number of battery profiles stored in the database increases.

Data to be stored in memory or in the database are for example momentary and historical values of charge currents, voltages, temperatures (battery and environment), charge profiles, type of vehicle connected to charger, grid load, grid limits, cell voltages, charge times, account data of users, state of health of the battery, vehicle configuration (nominal range, data connection speed, nominal capacity of battery etc), energy meter data from a charge station, or energy division (distribution) data from a charge station.

The use of a distributed architecture has the advantage of potentially being more reliable.

The configuration device may for instance be a computer at a remote location, for example located at an end-users control centre. It may communicate with the data processing device via an internet connection or a telephone line or a wireless connection, or communication may take place by a website, hosting an application for editing configuration details, reading logged measurements, settings, profiles, statistical data etc., or sorting data, computing reports and/or graphs. Use of the configuration device may be restricted to specific users of which a user management takes place at the data processing device or the database. The configuration may be suitable for human users, but it may also be automated, and suitable for automatically changing settings in the database based on inputs from for example other databases or datastreams. For that purpose, an application programming interface (API) may be provided by the data configuration device.

In an embodiment, the energy exchange station is configured to provide vehicle information to the data processing device, regarding a vehicle coupled to the port for exchanging energy with a vehicle. Vehicle information may comprise vehicle identification data, data describing a technical configuration of the vehicle (such as the type of battery used or the battery or vehicle management system used), or instantaneous data, such as the temperature of the vehicle, the state of charge of the battery, or data measured and/or generated before, during use of the vehicle, in particular regarding charging and uncharging the battery.

The vehicle information provided may thus comprise battery information, which can either be registered during use of the vehicle by a registration unit in the vehicle or during energy exchange by the energy exchange station, or, for completing or editing the battery profiles in the database.

In case no vehicle information is present, the energy exchange station may be configured to perform a test on the vehicle or a battery thereof. Important characteristics like a battery voltage, an internal battery resistance, or a charge curve may be determined, for example by sending a DC pulse train to the battery. By applying an AC power on the vehicle, the characteristics of its internal charger may be determined. Information thus determined could be made available to third parties, or be used by the charge station to provide optimal charge service.

Based on this the vehicle information and/or configuration details and/or battery profiles from the database, the data processing device can provide optimised energy exchange settings to the energy exchange station. Optimisation may be done on various criteria, which may be predetermined by a user and stored in the configuration data, or on information, data or defaults stored in the database, in the energy exchange station, or even in a battery management system of the vehicle. Information obtained from charge and discharge characteristics obtained during tests, or obtained from measurements on other vehicles may be stored in the database and used to calculate the optimised energy exchange settings by the data processing device.

For example, energy exchange settings are optimised according to at least one parameter related to the battery or the vehicle, such as the type of battery or an actual energy status of the battery, a battery temperature, an intended battery lifetime (e.g. expressed in the number of charge and/or discharge cycles), a desired available power, or an available or desired charge-time or radius of action (driving range).

Besides information from a specific battery energy needs to be exchanged with, the energy exchange settings for a certain vehicle may be optimised based on at least a parameter related to a second vehicle, coupled to a second port for energy exchange of the energy exchange station, or at least a parameter related to at least a second vehicle, coupled with a second port for energy exchange of the energy exchange station, or at least a parameter related to the power source.

In an advantageous embodiment, the system is configured to, in particular real-time, updating the energy exchange settings by the data processing device in response to a change of a parameter related to said battery or a change of a parameter related to the energy source, and updating the energy exchange between the energy exchange station and a vehicle coupled to an energy exchange port thereof accordingly.

Specific benefits can be obtained with the system according to the invention by configuring it to the specific needs or wants of a specific customer. This is for instance enabled by the API's provided to access the data processing device and/or the configuration device. In the following, this will be explained into more detail with the aid of several non-limiting examples.
Example 1: when a power source formed by a grid has less power available than the demand of several vehicles, the grid power can be distributed over the charging outputs, for example according to priority of the vehicles to drive away. This priority can be entered in the system by a user application which connects to the configuration device or to the data processing device through an API. This application of the system can be an advanced fleet management software system or a simple user interface where the user can enter how much time he has before he has to drive off again. The available grid power can be known to a pre-programmed setting in the data processing device, or through a API which interacts with the software of a grid provider (smart-grid). Upon changes entered or occurred at any place in the system, the energy exchange settings are dynamically changed (optimised) in real time. The distribution of the power from the grid to the vehicles can be proportional or disproportional, and can take place simultaneously, or subsequently, by giving a vehicle with more urgency priority during charging.
Example 2: the system (in particular the data processing device, or the configuration device) can interact through an API between billing and payment applications which run at the computers of utilities or other energy providers. As such the system can limit the amount of charging power at a specific charging socket based on the type of subscription a user has for energy delivery. A premium subscription may for instance mean that a vehicle can receive 50 kW charging power and be charged very fast, whereas a basic subscription can mean that the user can only receive 20 kW and charge much slower.
Example 3: if a system has multiple energy exchange ports for vehicles (outlets), and one energy exchange port for a power source, such as an AC input, the system can calculate the power distribution over the outlets. As such one needs only 1 officially certified AC energy consumption meter at the input and still know how much energy went to each outlet.
Example 4: the system can optimise the charging profile based on a battery life requirement. A general rule is that the faster charging is applied, the higher potential impact on battery life occurs. Through a user application entering data into the system through an API on the data processing device or a configuration device, the system obtains information about the battery life requirement for a certain customer.
   Based on this requirement, the charge profile and speed are adjusted once a customer connects the vehicle to the system. The system makes a trade-off between the battery life requirement and the available time to get the battery fully charged.
Example 5: The system slows charging down or speeds charging up based on the current price of electricity, for example when different tariffs are applied during different times of the day, or when peak level agreements have been made. Charging may even be cancelled when a predetermined threshold tariff is exceeded.
Example 6: The system has an interface for installation partners which provides information about the functioning of the system. If something goes wrong it sends an error code to the local installation partner via an API so the local installer knows which equipment to bring to do a repair. Such an API could also provide possibility for testing and /or reconfiguring the equipment form a remote location.
Example 7: when a new charge profile (battery profile to base the energy exchange settings on) is determined for a certain battery type it is stored in the database. As soon as a battery of that type is recognized at one of the energy exchange stations the updated charge profile will be send from the data processing device to the energy exchange station, and the charging process will be optimized.
Example 8: the system generally relies on the data communication ports and interconnections therein, for example internet connections. If the internet connection of the system is not working the charging will continue according to all the current settings. If a new vehicle is connected all settings will be changed to default profiles.
Example 9: if an energy exchange station has multiple outputs and a user disconnects a vehicle earlier than expected, the system can re-distribute the total power over the charge connections according to decision rules such as operational schedule, etc, to create a new optimal situation considering all parameters known to the system at that point in time.
Example 10: the system can adjust the settings based on future situations, if it knows through a fleet management connection that a new vehicle will arrive at an energy exchange station within 10 minutes, it can speed up charging at one or more ports to make sure that a port is available at the time the vehicle arrives.
Example 11: Local grid operators may manage local electricity shortage per area, per transformer station or for a whole site at each given point in time. Also even nationwide, for the whole of Europe or the world. This could be implemented through the use of domains and sub domains like in the internet structure. The system also takes into account the presence of local storage (batteries or else) in the grid or even in the charging facility and optimise based on these parameters.
Example 12: Maximum reliability is created for the charging of the fleet owner: if one system does not work anymore the network can know and can direct the vehicles via a fleet management API to the right energy exchange station (for example just a charger) and optimise the whole situation based on the new situation with one or more chargers not functioning. The same can hold for the situation where a charger can still work but only at reduced power.
Example 13: the system optimises the charging based on a fixed charge time. An energy exchange stations owner can set the fastest possible charge time at a predetermined amount, such as 20 minutes, to encourage users to make use of other services he offers, i.e. to drink coffee, eat a snack, etc. The energy exchange station may provide a warranty that charging will take 20 minutes and encourage users to make use of the other services offered in the meantime.
Example 14: the system gives a user the ability to buy green power, or to select a provider of power.
Example 15: the system transfers data from the onboard vehicle computer or an onboard data storage device through the data communication port of the energy exchange station, and sends it through the charger via the internet to the data processing device.
Example 16: the server sends data to the vehicle through the data communication port, such as: enhanced operation profiles, user messages, settings, service and maintenance information, or to change the operating DOD (Depth of Discharge) window in the battery, or change the way the actual DOD window relates to the graphical representation on user interfaces. Also the system could change the settings in the onboard charger based on new insights. The system can also upload a new piece of software to the vehicle which handles the link between representation of the battery capacity on the user interface and the actual SOC (State-Of-Charge) of the battery. To influence the DOD window in the battery, the algorithm which defines the link between actual SOC and represented SOC may be replaceable too.
Example 17: the charging system is equipped with an advertisement display. Because the system knows exactly how long the car will stay at the charging system a API can be offered that enables advertisers to change the commercial on the display based on the time the car will stay at the charger.
Example 18: the hardware is onboard, but the whole way the battery is operated: balancing algorithms, balancing speed, state-of-health algoritms, state-of-charge algorithms can be updated every day from the remote server based on new insights.
Example 19: the power conversion device which is part of the energy exchange station is totally or partially inside the vehicle. As soon as the car connects to the offboard charge connection, the offboard components tell the onboard components how to transfer the energy based on the same offboard architecture as mentioned in other examples.
Example 20: when charging starts the system can perform several measurement charge pulses to determine the state-of-health of the battery: The system sends all kinds of pulses into the battery and monitors the response. Based on this the server can predict how healthy the battery is or the system can find out other parameters about the battery.
Example 21: the system can work dynamically with multiple charging standards or communication protocols: if a vehicle is connected it detects what kind of protocol or connection is on the other side, it then asks the server about what the communication protocol is and the charger implements this and starts charging. In this way the system can work with multiple standards also with standards which will be developed in the future.

The energy exchange station may comprise at least one electric power converter, for exchanging energy between the at least one port for energy exchange with an energy source and the at least one port for energy exchange with the vehicle, according to the provided energy exchange settings. Since energy sources may be AC (most grids are for example) or DC (solar panels or batteries for example), and batteries are operated on DC, but onboard chargers may be present, that require AC, the electric power converter may be any of an AC-AC converter, an AC-DC converter, a DC-AC-converter or a DC-DC converter. The device may be dedicated to performing one of said conversions, or configurable or programmable to perform different ones thereof.

In a further embodiment, the energy exchange station comprises a plurality of electric power converters, for exchanging energy with a plurality of possible vehicles via the plurality of ports for exchanging energy with a plurality of vehicles, according to various energy exchange settings.

When more than one vehicle is present, the data processing device determines the energy exchange settings for every vehicle, and the energy exchange station exchanges energy with the vehicles coupled to the various ports, each energy exchange taking place according to the corresponding energy exchange settings.

To enable this, the energy exchange station comprises a connection matrix, for changeably coupling the energy converters with ports for exchanging energy with vehicles. Such a matrix consists of controllable switches, allowing to connect the ports to the outputs of the electric power converters. Furthermore, changeable physical connector for enabling energy exchange with various vehicles may be required, as well as changeable physical connectors for data communication, and/or a configuration to communicate according to various protocols, for enabling data communication with various vehicles manufactured according to different standards. In yet another embodiment, an energy exchange station is equipped with different connectors, attached to different ports, like a conventional gasoline filling station is equipped with dispensers for various fuel types.

Since most electric vehicles are equipped nowadays with battery management systems and/or vehicle management systems, the port for data communication of the energy exchange is preferably configured to enable data exchange with a battery management system or a vehicle management system. These systems may comprise data regarding energy exchange setting, which can be used by the energy exchange station. It may also be possible that the vehicle comprises a data processing device, for example a control system of the charger, that is equipped to communicate data obtained from the battery management system or from the vehicle management system.

In particular, the following embodiments may form part of the invention.

An embodiment wherein the energy exchange station communicates with a charge communication device. Such a device may be realised in hardware or software or a combination thereof, and may, but is not necessarily situated on board. This device in turn communicates with devices associated with the at least one battery (e.g. Battery Management System) and/or devices associated with the vehicle (e.g. Vehicle Management System).

In another embodiment the station communicates with a charge communication device. This device in turn communicates with devices associated with the vehicle (e.g. Vehicle Management System) which in turn communicates with devices associated with the at least one battery (e.g. Battery Management System).

In yet another embodiment the station communicates with devices associated with the at least one battery (e.g. Battery Management System).

In a further embodiment the station communicates with devices associated with the vehicle (e.g. Vehicle Management System) which in turn communicates with devices associated with the at least one battery (e.g. Battery Management System).

In an even further embodiment the station communicates with devices associated with the at least one vehicle(e.g. Battery Management System). The Devices associated with the battery contains software to correctly and optimally function with the station.

Based on specific information from the battery management system or the vehicle management system, regarding the temperature of (part of) the battery, special energy exchange patterns may be applied to influence the temperature of the battery. For example, an AC current or PWM (pulse width modulation) may be used to increase the temperature of the battery before or during charging or using it. If detailed information is available about (temperatures of) different cells of the battery, and these cells can be allocated separately, the energy exchange station may even be able to compensate for temperature differences along the battery, for instance caused by part of the battery that has been exposed to sunlight.

Besides vehicle or battery information, information from or regarding the power source may be useful to determine the energy exchange settings upon. In case of a grid as an energy source, arrangements may be made about the peak levels consumed, or the costs during specific intervals of time. In case of wind energy sources or solar panels, weather forecasts may play a role in determining the energy exchange settings. It is also possible that the use of multiple energy sources is comprised in the energy exchange settings, based on these forecasts and/or peak expectations at energy source side and/or at vehicle or battery side.

The energy exchange station may further be coupled or form part of a data communication network for servicing, wherein it sends alerts when it has detected that it needs maintenance, or that defects or malfunctioning have taken place.

The configuration device may serve as a link to incorporate external influences, such as expected energy peak levels (both at energy source and vehicle side), financial arrangements with for example power companies, or even logistic considerations with respect to various vehicles, for example from one fleet owner.

The configuration device may be coupled with information systems from third parties, and based on information exchanged with these systems, store data, such as data relating to energy peak values or energy prices regarding the energy exchange from the at least one power source in the database, for calculation of energy exchange profiles based thereon by the data processing device. It may also be possible to couple the configuration device to a metering device, for example from an energy source, to monitor the energy that has been exchanged, and to base (changes in) the configuration thereon.

The energy exchange station may further be configured to exchange data between the respective data communication ports of the vehicle and the data processing device and/or the configuration device, without making use of this data itself. Information is tunnelled this way between the vehicle and the data processing unit and/or the configuration device. This could be used to exchange information such as software or firmware updates, traffic information, travel registrations and the like. This way it is also possible to send information from a configuration device to a vehicle. The tunnelled information can in particular be encoded or encrypted, to protect it from being intercepted by third parties.

The system may comprise more than one configuration device, which may communicate with the data processing device, but also directly with other configuration devices. For example both a (grid) power company and a fleet owner have separate configuration devices, which communicate peak level tariffs and/or price levels.

The invention will now be elucidated with reference to the following figures, wherein:
- Figures 1a-h show a schematic overview of the system according to the present invention.
- Figures 2a-f show particular embodiments of an energy exchange station according to the invention.

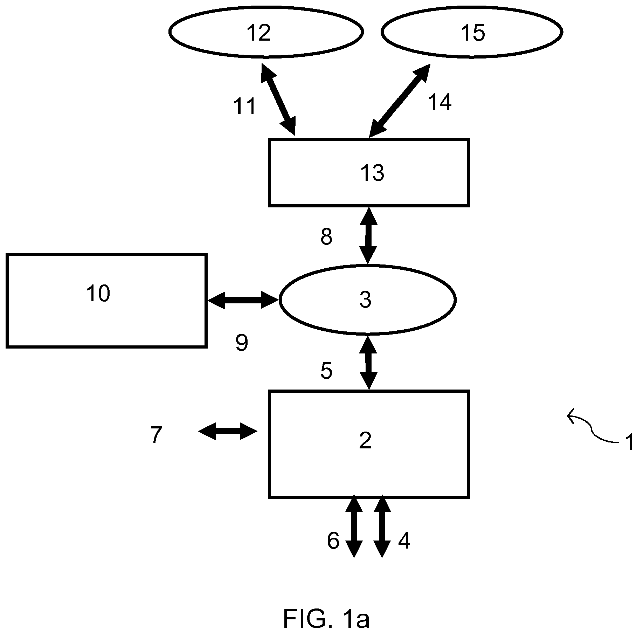

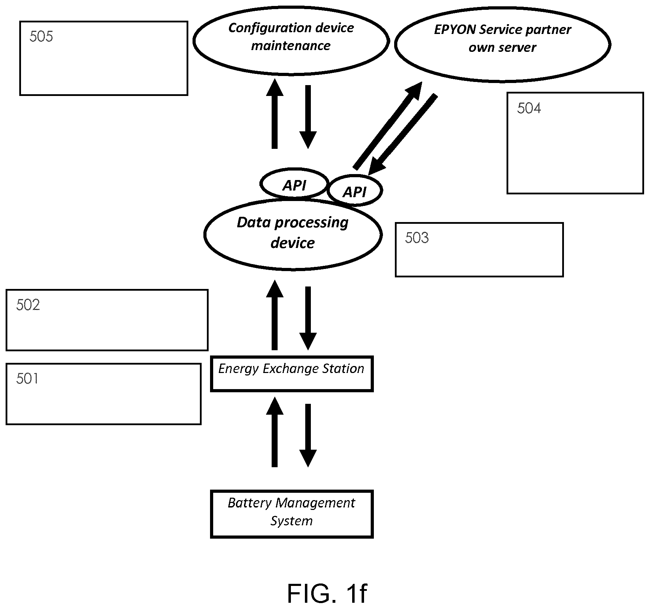

Figure 1a shows a general layout 1 of a charge station according to the present invention. The system comprises an energy exchange station 2, a data processing device 3, and a configuration device 12. The energy exchange station comprises a port for exchanging energy 7 with an energy source, a port for exchanging energy 4 with a vehicle, a port for data communication 6 with the vehicle, and a port for data communication 5 with a data processing device 3. The data processing device 3 comprises a port for data communication 5 with the energy exchange station 2, a port for data communication 8 with at least one configuration devices 12 and 15 through an API 13, and a database 10, for storing 9 at least configuration details and battery profiles. The configuration devices 12 and 15 comprise a port for exchanging data 11, 14 with the data processing device 3 through the API 13 and means, such as a user interface, for editing the configuration details in the database 10.

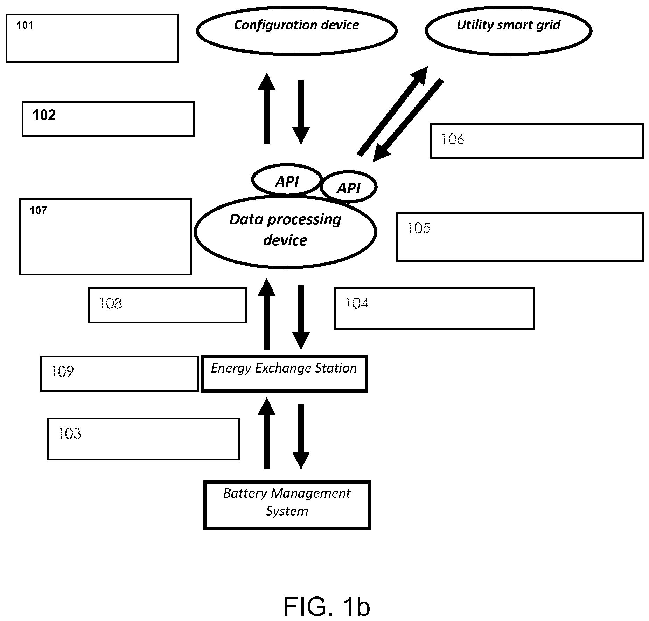

Figure 1b shows a case wherein available grid power is less than the required power demanded by vehicles. The grid power is distributed over the charging outputs according to priority of the vehicles to drive away. This priority can be entered in the system by a user application which connects to an API in the data processing device. This application can be an advanced fleet management software system or a simple user interface where the user can enter how much time he has before he has to drive off again. The available grid power can be known to a pre-programmed setting in Data processing device, or through a API which interacts (real time or semi-real time) with the software of a grid provider (smart-grid). The numbers in the figure refer to the following steps:
101. The priority of each vehicle is entered into a configuration device computer application;
102. The data processing device stores vehicle priorities in database;
103. A vehicle connects to one output of the energy transfer station and transfers data to the energy transfer station;
104. The energy transfer station sends parameters to the data processing device (SOC/ battery data, etc.)
105. The data processing device stores battery data in the database and recognises the characteristics of the energy transfer station (#outputs, total power, etc.);
106. The data processing device request via an API the maximum available power in the grid;
107. The data processing device calculates the best charge profile for the output considering all conditions (battery SOC, grid, priorities, etc.);
108.The data processing device sends charge profiles to the energy transfer station;
109. the energy transfer station redistributes the power over each output.

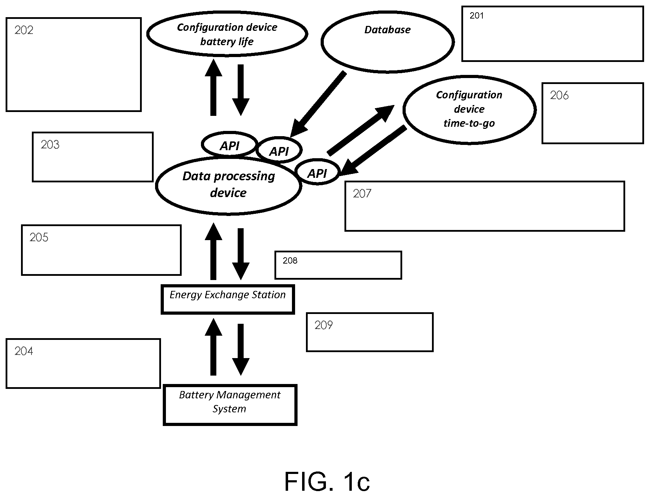

Figure 1c shows a case wherein the system optimises the charging profile based on a battery life requirement. The general rule is that the faster the charging is, the higher the potential impact on battery life. Through a user application entering data into the system through a data processing device API the system can know what the battery life requirement for a certain customer is. Based on this requirement the charge profile and speed can be adjusted once a customer connects the vehicle to the system. The system can also make a trade-off between the battery life requirement and the available time to get the battery fully charged.
201. Customer specific charge profiles and one generic charge profile for specific batteries are entered through an application into Data processing device;
202. The minimum required cycle life per vehicle is entered into the database via a configuration device application to use a delivery vehicle with the specific batteries based on a cycle life promise;
203. The data processing device stores the new charge profiles and the customer specific charge profiles;
204. A vehicle connects to one output of the energy exchange station and transfers current data to the energy exchange station and also data logfiles;
205. Energy Exchange Station sends parameters to the data processing device (SOC/ battery data, etc.) and also receives historical driving data stored in the battery management system datalog;
206. The driver which arrives enters his preferred time-to-go through a configuration device interface (FED-EX PDA, iPhone application);
207. The data processing device knows which battery is at each output and also knows the preferred time to leave again. The data processing device matches this with the cycle life requirement. The correct charge profiles are calculated based on the cycle life requirements and the time-to-go requirements;
208. The data processing device sends charge profiles to the energy exchange station; 209. The energy exchange station redistributes the power over each output.

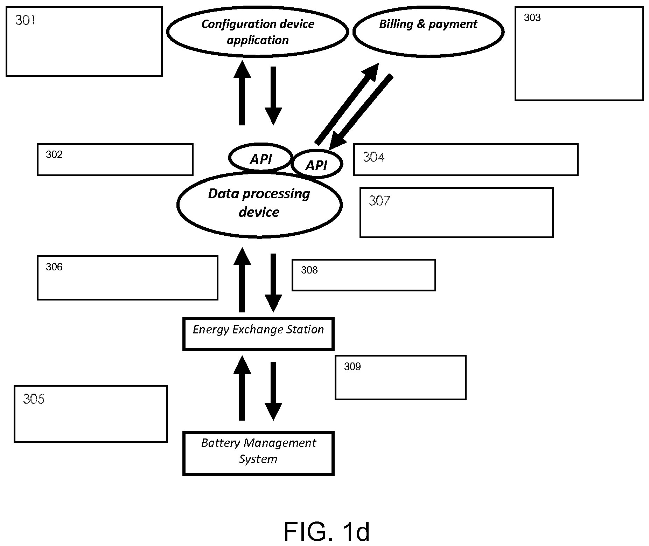

Figure 1d shows a case wherein the data processing device can interact through an API between billing and payment applications which run at the computers of utilities or other energy providers. As such the system can limit the amount of charging power at a specific charging socket based on the type of subscription a user has for energy delivery. For example a premium subscription can mean that the car can receive 50 kW charging power end be charged very fast, but a basic subscription can mean that the user can only receive 20 kW and charge much slower.
301. Via a configuration device application the ID number of several batteries of a new customer are entered into the database by a sales department;
302. The data processing device stores battery ID's in database;
303. A utility company has special offers: BASIC subscriptions allow 20 kW charging, Premium subscriptions allow 50 kW charging. The utility company applications match the Battery ID to the individual person and the subscription type. For each individual battery it sends the maximum allowed power to the data processing device;
304. The data processing device stores the maximum allowed power for each battery in the database;
305. The user connects the vehicle to one output of the energy exchange station and transfers data to the energy exchange station including it's battery ID;
306. The energy exchange station sends parameters to the data processing device (Battery ID /SOC/ battery data, etc.);
307. The data processing device matches the battery ID with the maximum power and calculates the best charge profile for the output;
308. The data processing device sends charge profile to the energy exchange station;
309. The energy exchange station controls the charging accordingly;

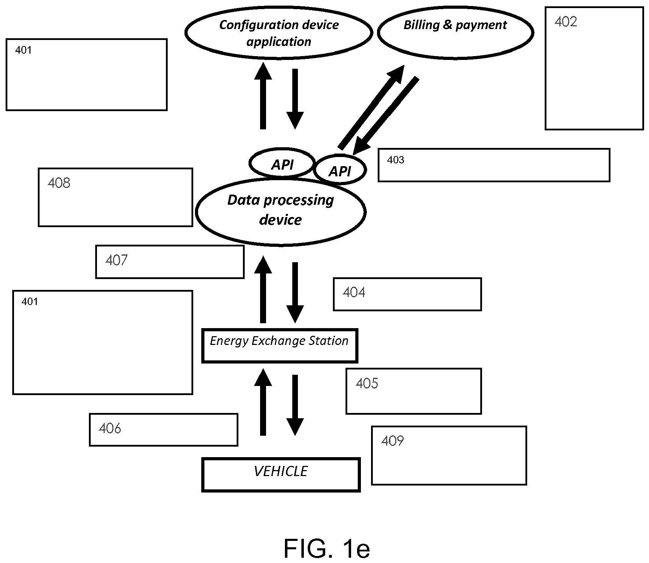

Figure 1e shows a case similar to the case from figure Id, but here the vehicle does not have a battery management system. The system (data processing device) can interact through an API between billing and payment applications which run at the computers of utilities or other energy providers. As such the system can limit the amount of charging power at a specific charging socket based on the type of subscription a user has for energy delivery. For example a premium subscription can mean that the car can receive 50 kW charging power end be charged very fast, but a basic subscription can mean that the user can only receive 20 kW and charge much slower.
401. Via a configuration device application the ID number of several batteries of a new customer are entered into the database by a sales department; a user is identified via a smart card system in the charging post. This data is send through the third party charging payment terminal modem. The user is identified together with the charging location;
402. The utility company has special offers: Basic subscriptions allow 20 kW charging, Premium subscriptions allow 50 kW charging. The utility company has a database containing which charger is postioned where. It also contains smartcard and user data. As soon as the utility receives the smartcard request (1) from it's customer it links this data and sends to Data processing device the maximum power setting;
403. Data processing device received the maximum power setting and a charge enable signal;
404. The data processing device sends charge enable to energy exchange station;
405. The energy exchange station connects to the vehicle and VMS datastream;
406. The VMS sends a charge power request to the energy exchange station;
407. The energy exchange station sends the VMS request to the data processing device;
408. The data processing device matches the max power to the requested power and sends the outcome to the energy exchange station;
409. the energy exchange station tells the VMS that it can only deliver 20 kW maximum and starts delivering the power.

Figure If shows a system with an interface for local (international) installation partners which provides information about the functioning of the system. If something goes wrong it can send an error code to the local installation partner (via a data processing device API) so the local installer knows which equipment to bring to do a repair.
501. During normal operation the energy exchange station sends data about its operations to Data processing device. These data are used to make advanced analysis;
502. At a certain moment something goes wrong in the functionality of tone of the chargers in a certain country. The energy exchange station sends an error code to the data processing device;
503. The data processing device stores all operational and error data;
504. A service & installation partner in the country has service software that receives the error code. The internal server infrastructure sends a message to one of the maintenance people the charger needs to be immediately fixed and a spare power supply is brought. The charger will be operational again quickly;
505. Via a configuration device maintenance application the history of the operation can be extensively studied to understand what has caused the problem.

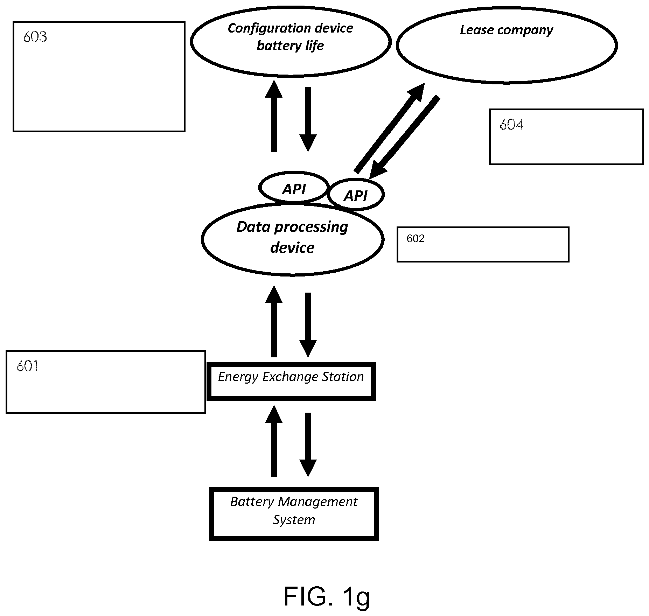

Figure 1g shows an example wherein battery life can be predicted based on historic data of the batteries and this information is offered to leasing companies.
601. During normal operation the energy exchange station sends data about the batteries in the field to the data processing device;
602. The data processing device stores all battery data of batteries in the field;
603. Via a configuration device battery life application the software systems can study behaviour of batteries in the field and have software analyse the trend in battery life. They can make a prediction for each battery and send it to the data processing device;
604. A leasing company receives the actual battery life estimate for each battery in the field and can use it to make financial models.

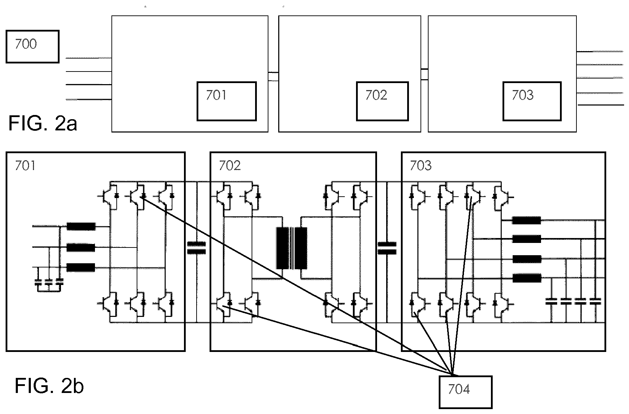

Figure 2a shows a schematic view of an example of a electric power converter 700 for use in an energy transfer station according to the invention. The energy transfer station comprises a multiphase (for example three phase) AC/DC converter 701, which is coupled to a DC/DC converter 702, comprising a galvanic separation. The DC/DC converter is coupled to a multi-phase (for example four) DC/AC converter 703.

Figure 2b shows a simplified electric scheme of the converter 700 from figure 2a, wherein like numbers indicate like parts. The converter uses switches 704, which are controlled by a micro-controller (not shown).

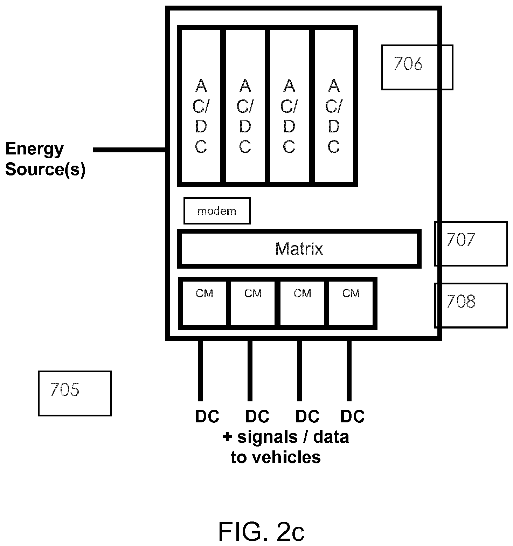

Figure 2c shows an example wherein the energy exchange station 705 consists internally of several power converters 706 (for example, but not necessarily AC/DC converters), a connection matrix 707, for changeably coupling the energy converters with ports for exchanging energy with vehicles. The ports consist of a connection manager 708, a system which manages the control of one specific connection, an output consisting of data and DC energy port, a charging cable and at the end of the charging cable a connector for coupling the energy exchange station to the vehicle.

Based on this configuration each power converter, or multiple power converters together can be coupled to one output of the energy exchange station. As such this configuration can distribute the power over the multiple outputs of one energy exchange station at different power levels, voltage levels or current levels per output.

The connection managers will manage one connection each (data transfer, power transfer, safety), therefore this configuration enables the use of different connection standards, cables and physical connections on one energy exchange station simultaneously. Additionally, with no additional effort, one connection manager (plus its cable and connector) and thus one energy exchange port can be replaced by another one, as all specific protocols and safety are handled by the connection manager. This increases the flexibility of a energy exchange station to respond to market changes, market penetration of a specific charge system etc.

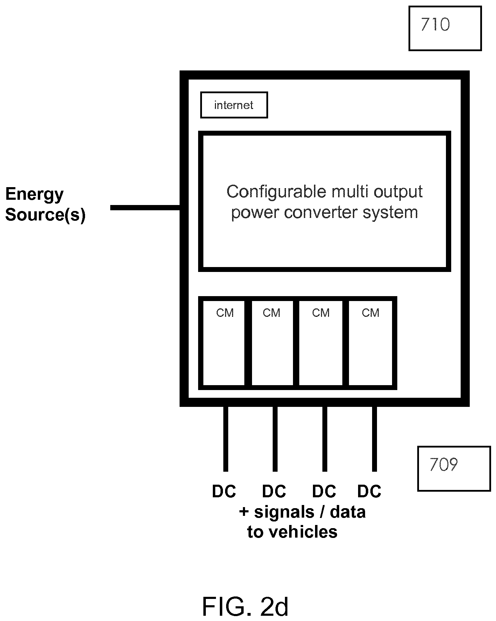

Figure 2d shows an embodiment of an energy exchange station 709 which consists internally of a configurable power supply 710 unit with multiple outputs which are coupled (possibly fixed) to the energy exchange ports of the energy exchange station. The ports again can consist of a connection manager, a system which manages the control of one specific connection, an output consisting of data and DC energy port, a charging cable and at the end of the charging cable a connector for coupling the energy exchange station to the vehicle.

The configurable power supply can adjust the current, voltage and power levels per output. As such this configuration can also distribute the power over the multiple outputs of one energy exchange station at different power levels, voltage levels or current levels per output. The connection managers can be identical to those described in the previous embodiment.

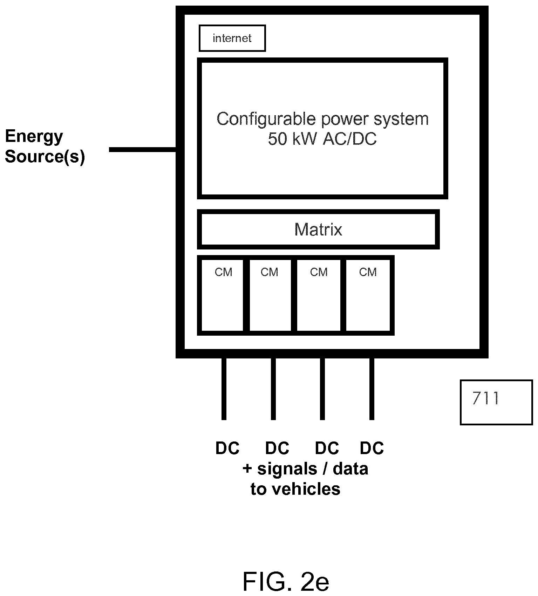

Figure 2e shows an energy exchange station 711 which is a combination of embodiment 1 & 2. The energy exchange station can consist internally of a configurable power supply unit with multiple outputs which is connection matrix.

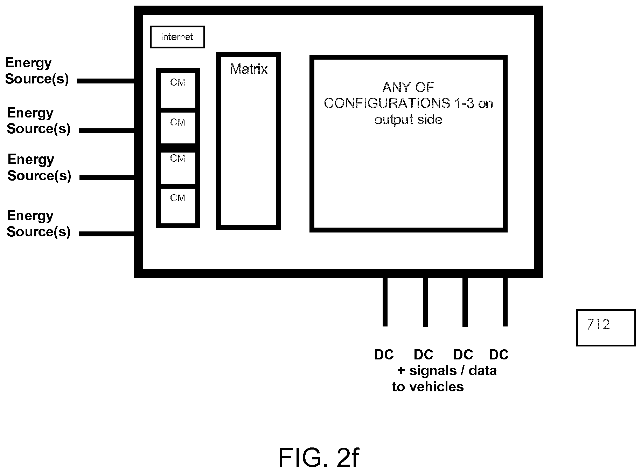

Figure 2f shows an energy exchange station 712 that in the same way as the connection managers at the output, these kind of connection managers can be installed at the power inputs of the charge station, where they manage data transfer, power transfer and safety of each power input separately.

Different connection managers can be implemented to connect and optionally communicate with different sources, such as Grid power (by different grid owners), wind power, solar power, local storage (emergency power or load balancing) or any other source of energy thinkable. The optional communication is of course only possible when the source also has means to communicate.

The connection managers are intelligent and can thus negotiate the need of the charge station with the power source (grid owner) or tell the energy exchange station about energy surplus (which can be used to accelerate charging) when one of the inputs is a windmill and there is more wind than predicted.

Besides the embodiments and examples shown, the present invention can be applied in various ways, that all fall within the scope of protection, as defined in the following claims.

## Claims

1. System for exchanging energy with an electric vehicle, in particular with a battery thereof, comprising:
- at least one energy exchange station (2), comprising:
∘ at least one port (7) for exchanging energy with an energy source;
∘ at least one port (4) for exchanging energy with a vehicle;
∘ at least one port (6) for data communication with the vehicle;
∘ at least one port (5) for data communication with a data processing device;
∘ at least one electric power converter, for exchanging energy between:
▪ the at least one port (5) for energy exchange with an energy source and
▪ the at least one port (4) for energy exchange with the vehicle,
▪ according to energy exchange settings, provided by a data processing device (3);
∘ wherein the energy exchange station (2) is configured to provide vehicle information to the data processing device (3), regarding a vehicle coupled to the port for exchanging energy with a vehicle (4);
**characterised in that**
∘ in case no vehicle information is present, the energy exchange station (2) is configured to perform a test on the vehicle or a battery thereof for determining characteristics like a battery voltage, an internal battery resistance, or a charge curve, and;
∘ wherein the energy exchange station comprises a connection matrix (707), for changeably coupling the energy converters with ports for exchanging energy with vehicles;
- a data processing device (3), comprising:
∘ at least one port for data communication with the energy exchange station (2);
∘ at least one port for data communication with at least one configuration device (12);
- at least one configuration device (12), comprising:
∘ at least one port for exchanging data with the data processing device; and
∘ means, such as a user interface, for editing configuration details and or exchanging data with the vehicle.

2. System according to claim 1, wherein the at least one port (7) for energy exchange of the at least one energy exchange station comprises a changeable physical connector for enabling energy exchange with various vehicles.

3. System according to any of the preceding claims, wherein the at least one port (6) for data communication with the vehicle comprises an changeable physical connection, and/or is configured for data communication according to various protocols, for enabling data communication with various vehicles.

4. System according to any of the preceding claims, wherein the at least one port (6) for data communication is configured for data exchange with a battery management system or a vehicle management system.

5. System according to any of the preceding claims, wherein the configuration device (12) is configured to manage, process or store data relating to energy peak values or energy prices regarding the energy exchange from the at least one power source.

6. System according to any of the preceding claims, wherein the configuration device (12) is coupled to at least one metering device or service from the at least one energy source.

7. System according to any of the preceding claims, wherein the energy exchange station (2) is configured to exchange data between the respective data communication ports of the vehicle and the data processing device and/or the configuration device.

8. Energy exchange station (2), for use in a system according to any of the preceding claims, comprising:
∘ at least one port (7) for exchanging energy with an energy source;
∘ at least one port (4) for exchanging energy with a vehicle;
∘ at least one port (6) for data communication with the vehicle;
∘ at least one port (5) for data communication with a data processing device;
∘ at least one electric power converter, for exchanging energy between:
▪ the at least one port (5) for energy exchange with an energy source and
▪ the at least one port (4) for energy exchange with the vehicle,
▪ according to energy exchange settings, provided by a data processing device;
∘ wherein the energy exchange station (2) is configured to provide vehicle information to the data processing device, regarding a vehicle coupled to the port (6) for exchanging energy with a vehicle;
**characterised in that**
∘ in case no vehicle information is present, the energy exchange station (2) is configured to perform a test on the vehicle or a battery thereof for determining characteristics like a battery voltage, an internal battery resistance, or a charge curve, and;
∘ wherein the energy exchange station (2) comprises a connection matrix (707), for changeably coupling the energy converters with ports for exchanging energy with vehicles.

9. Method for operating an energy exchange station (2) according to any of the preceding claims, comprising the step of switching electric power converters between the at least one energy exchange port (5) for exchanging energy with a power source and respective ports for exchanging energy with electric vehicles, for exchanging electric energy with the respective vehicles, each vehicle according to specific energy exchange settings wherein the energy exchange station (2) is configured to provide vehicle information to the data processing device, regarding a vehicle coupled to the port (4) for exchanging energy with a vehicle;
**characterised in that**
∘ in case no vehicle information is present, the energy exchange station (2) is configured to perform a test on the vehicle or a battery thereof for determining characteristics like a battery voltage, an internal battery resistance, or a charge curve, and;
wherein the energy exchange station (2) comprises a connection matrix (707), for changeably coupling the energy converters with ports (4) for exchanging energy with vehicles.

## Patentansprüche

1. System zum Austauschen von Energie mit einem Elektrofahrzeug, insbesondere mit einer Batterie davon, das Folgendes umfasst:
- mindestens eine Energieaustauschstation (2), die Folgendes umfasst:
∘ mindestens einen Anschluss (7) zum Austauschen von Energie mit einer Energiequelle;
∘ mindestens einen Anschluss (4) zum Austauschen von Energie mit einem Fahrzeug;
∘ mindestens einen Anschluss (6) zur Datenkommunikation mit dem Fahrzeug;
∘ mindestens einen Anschluss (5) zur Datenkommunikation mit einer Datenverarbeitungsvorrichtung;
∘ mindestens einen elektrischen Stromwandler zum Austauschen von Energie zwischen:
▪ dem mindestens einen Anschluss (5) zum Energieaustausch mit einer Energiequelle und
▪ dem mindestens einen Anschluss (4) zum Energieaustausch mit dem Fahrzeug,
▪ gemäß Energieaustauscheinstellungen, die von einer Datenverarbeitungsvorrichtung (3) bereitgestellt werden;
∘ wobei die Energieaustauschstation (2) dazu ausgelegt ist, der Datenverarbeitungsvorrichtung (3) Fahrzeuginformationen mit Bezug auf ein Fahrzeug, das an den Anschluss zum Austauschen von Energie mit einem Fahrzeug (4) gekoppelt ist, bereitzustellen;
**dadurch gekennzeichnet, dass**
∘ in einem Fall, in dem keine Fahrzeuginformationen vorhanden sind, die Energieaustauschstation (2) dazu ausgelegt ist, zum Bestimmen von Eigenschaften, wie einer Batteriespannung, einem internen Batteriewiderstand oder einer Ladungskurve, einen Test am Fahrzeug oder einer Batterie davon durchzuführen, und
∘ wobei die Energieaustauschstation eine Verbindungsmatrix (707) zum änderbaren Koppeln der Energiewandler an Anschlüsse zum Austauschen von Energie mit Fahrzeugen umfasst;
- eine Datenverarbeitungsvorrichtung (3), die Folgendes umfasst:
∘ mindestens einen Anschluss zur Datenkommunikation mit der Energieaustauschstation (2);
∘ mindestens einen Anschluss zur Datenkommunikation mit mindestens einer Auslegungsvorrichtung (12);
- mindestens eine Auslegungsvorrichtung (12), die Folgendes umfasst:
∘ mindestens einen Anschluss zum Austauschen von Daten mit der Datenverarbeitungsvorrichtung und
∘ ein Mittel, wie etwa eine Benutzerschnittstelle, zum Bearbeiten von Auslegungsdetails und/oder zum Austauschen von Daten mit dem Fahrzeug.

2. System nach Anspruch 1, wobei der mindestens eine Anschluss (7) zum Energieaustausch der mindestens einen Energieaustauschstation einen änderbaren physischen Verbinder zum Ermöglichen des Energieaustauschs mit unterschiedlichen Fahrzeugen umfasst.

3. System nach einem der vorhergehenden Ansprüche, wobei der mindestens eine Anschluss (6) zur Datenkommunikation mit dem Fahrzeug zum Ermöglichen einer Datenkommunikation mit unterschiedlichen Fahrzeugen eine änderbare physische Verbindung umfasst und/oder für eine Datenkommunikation gemäß unterschiedlichen Protokollen ausgelegt ist.

4. System nach einem der vorhergehenden Ansprüche, wobei der mindestens eine Anschluss (6) zur Datenkommunikation zum Datenaustausch mit einem Batterieverwaltungssystem oder einem Fahrzeugverwaltungssystem ausgelegt ist.

5. System nach einem der vorhergehenden Ansprüche, wobei die Auslegungsvorrichtung (12) dazu ausgelegt ist, Daten, die Energiespitzenwerte oder Energiepreise betreffen, mit Bezug auf den Energieaustausch von der mindestens einen Stromquelle zu verwalten, zu verarbeiten oder zu speichern.

6. System nach einem der vorhergehenden Ansprüche, wobei die Auslegungsvorrichtung (12) an mindestens eine Dosiervorrichtung oder einen Dosierdienst von der mindestens einen Energiequelle gekoppelt ist.

7. System nach einem der vorhergehenden Ansprüche, wobei die Energieaustauschstation (2) dazu ausgelegt ist, Daten zwischen den jeweiligen Datenkommunikationsanschlüssen des Fahrzeugs und der Datenverarbeitungsvorrichtung und/oder der Auslegungsvorrichtung auszutauschen.

8. Energieaustauschstation (2) zur Verwendung in einem System nach einem der vorhergehenden Ansprüche, die Folgendes umfasst:
∘ mindestens einen Anschluss (7) zum Austauschen von Energie mit einer Energiequelle;
∘ mindestens einen Anschluss (4) zum Austauschen von Energie mit einem Fahrzeug;
∘ mindestens einen Anschluss (6) zur Datenkommunikation mit dem Fahrzeug;
∘ mindestens einen Anschluss (5) zur Datenkommunikation mit einer Datenverarbeitungsvorrichtung;
∘ mindestens einen elektrischen Stromwandler zum Austauschen von Energie zwischen:
▪ dem mindestens einen Anschluss (5) zum Energieaustausch mit einer Energiequelle und
▪ dem mindestens einen Anschluss (4) zum Energieaustausch mit dem Fahrzeug,
▪ gemäß Energieaustauscheinstellungen, die von einer Datenverarbeitungsvorrichtung bereitgestellt werden;
∘ wobei die Energieaustauschstation (2) dazu ausgelegt ist, der Datenverarbeitungsvorrichtung Fahrzeuginformationen mit Bezug auf ein Fahrzeug, das an den Anschluss (6) zum Austauschen von Energie mit einem Fahrzeug gekoppelt ist, bereitzustellen;
**dadurch gekennzeichnet, dass**
∘ in einem Fall, in dem keine Fahrzeuginformationen vorhanden sind, die Energieaustauschstation (2) dazu ausgelegt ist, zum Bestimmen von Eigenschaften, wie einer Batteriespannung, einem internen Batteriewiderstand oder einer Ladungskurve, einen Test am Fahrzeug oder einer Batterie davon durchzuführen, und
∘ wobei die Energieaustauschstation (2) eine Verbindungsmatrix (707) zum änderbaren Koppeln der Energiewandler an Anschlüsse zum Austauschen von Energie mit Fahrzeugen umfasst.

9. Verfahren zum Betreiben einer Energieaustauschstation (2) nach einem der vorhergehenden Ansprüche, das den Schritt des Umschaltens von elektrischen Stromwandlern zwischen dem mindestens einen Energieaustauschanschluss (5) zum Austauschen von Energie mit einer Stromquelle und jeweiligen Anschlüssen zum Austauschen von Energie mit Elektrofahrzeugen zum Austauschen von elektrischer Energie mit den jeweiligen Fahrzeugen, jedes Fahrzeug gemäß spezifischen Energieaustauscheinstellungen, umfasst, wobei die Energieaustauschstation (2) dazu ausgelegt ist, der Datenverarbeitungsvorrichtung Fahrzeuginformationen mit Bezug auf ein Fahrzeug, das an den Anschluss (4) zum Austauschen von Energie mit einem Fahrzeug gekoppelt ist, bereitzustellen;
**dadurch gekennzeichnet, dass**
∘ in einem Fall, in dem keine Fahrzeuginformationen vorhanden sind, die Energieaustauschstation (2) dazu ausgelegt ist, zum Bestimmen von Eigenschaften, wie einer Batteriespannung, einem internen Batteriewiderstand oder einer Ladungskurve, einen Test am Fahrzeug oder einer Batterie davon durchzuführen, und
wobei die Energieaustauschstation (2) eine Verbindungsmatrix (707) zum änderbaren Koppeln der Energiewandler an Anschlüsse (4) zum Austauschen von Energie mit Fahrzeugen umfasst.

## Revendications

1. Système d'échange d'énergie avec un véhicule électrique, en particulier avec une batterie de celui-ci, le système comprenant :
- au moins une station d'échange d'énergie (2), comprenant :
∘ au moins un port (7) d'échange d'énergie avec une source d'énergie ;
∘ au moins un port (4) d'échange d'énergie avec un véhicule ;
∘ au moins un port (6) de communication de données avec le véhicule ;
∘ au moins un port (5) de communication de données avec un dispositif de traitement de données ;
∘ au moins un convertisseur de puissance électrique, pour échanger de l'énergie entre :
▪ l'au moins un port (5) d'échange d'énergie avec une source d'énergie, et
▪ l'au moins un port (4) d'échange d'énergie avec le véhicule,
▪ selon des paramètres d'échange d'énergie, fournis par un dispositif de traitement de données (3) ;
∘ la station d'échange d'énergie (2) étant configurée pour fournir des informations de véhicule au dispositif de traitement de données (3) concernant un véhicule couplé au port d'échange d'énergie avec un véhicule (4) ;
**caractérisé en ce que** :
∘ si aucune information de véhicule n'est présente, la station d'échange d'énergie (2) est configurée pour réaliser un test sur le véhicule ou sur une batterie de celui-ci pour déterminer des caractéristiques comme une tension de batterie, une résistance interne de batterie ou une courbe de chargement ; et
∘ la station d'échange d'énergie comprenant une matrice de connexion (707) pour coupler de manière changeable les convertisseurs d'énergie à des ports d'échange d'énergie avec des véhicules ;
- un dispositif de traitement de données (3), comprenant :
∘ au moins un port de communication de données avec la station d'échange d'énergie (2) ;
∘ au moins un port de communication de données avec au moins un dispositif de configuration (12) ;
- au moins un dispositif de configuration (12), comprenant :
∘ au moins un port d'échange de données avec le dispositif de traitement de données ; et
∘ un moyen, comme une interface d'utilisateur, de modification de détails de configuration et/ou d'échange de données avec le véhicule.

2. Système selon la revendication 1, dans lequel l'au moins un port (7) d'échange d'énergie de l'au moins une station d'échange d'énergie comprend un connecteur physique changeable pour permettre un échange d'énergie avec divers véhicules.

3. Système selon l'une quelconque des revendications précédentes, dans lequel l'au moins un port (6) de communication de données comprend une connexion physique changeable et/ou est configuré pour une communication de données selon divers protocoles pour permettre une communication de données avec divers véhicules.

4. Système selon l'une quelconque des revendications précédentes, dans lequel l'au moins un port (6) de communication de données est configuré pour un échange de données avec un système de gestion de batterie ou un système de gestion de véhicule.

5. Système selon l'une quelconque des revendications précédentes, dans lequel le dispositif de configuration (12) est configuré pour gérer, traiter ou stocker des données relatives à des valeurs de pic d'énergie ou à des prix d'énergie concernant l'échange d'énergie depuis l'au moins une source de puissance.

6. Système selon l'une quelconque des revendications précédentes, dans lequel le dispositif de configuration (12) est couplé à au moins un dispositif ou service de mesure depuis l'au moins une source d'énergie.

7. Système selon l'une quelconque des revendications précédentes, dans lequel la station d'échange d'énergie (2) est configurée pour échanger des données entre les ports de communication de données respectifs du véhicule et le dispositif de traitement de données et/ou le dispositif de configuration.

8. Station d'échange d'énergie (2), destinée à être utilisée dans un système selon l'une quelconque des revendications précédentes, comprenant :
∘ au moins un port (7) d'échange d'énergie avec une source d'énergie ;
∘ au moins un port (4) d'échange d'énergie avec un véhicule ;
∘ au moins un port (6) de communication de données avec le véhicule ;
∘ au moins un port (5) de communication de données avec un dispositif de traitement de données ;
∘ au moins un convertisseur de puissance électrique, pour échanger de l'énergie entre :
▪ l'au moins un port (5) d'échange d'énergie avec une source d'énergie, et
▪ l'au moins un port (4) d'échange d'énergie avec le véhicule,
▪ selon des paramètres d'échange d'énergie, fournis par un dispositif de traitement de données ;
∘ la station d'échange d'énergie (2) étant configurée pour fournir des informations de véhicule au dispositif de traitement de données concernant un véhicule couplé au port (6) d'échange d'énergie avec un véhicule ;
**caractérisée en ce que** :
∘ si aucune information de véhicule n'est présente, la station d'échange d'énergie (2) est configurée pour réaliser un test sur le véhicule ou sur une batterie de celui-ci pour déterminer des caractéristiques comme une tension de batterie, une résistance interne de batterie ou une courbe de chargement ; et
∘ la station d'échange d'énergie (2) comprenant une matrice de connexion (707) pour coupler de manière changeable les convertisseurs d'énergie à des ports d'échange d'énergie avec des véhicules.

9. Procédé d'utilisation d'une station d'échange d'énergie (2) selon l'une quelconque des revendications précédentes, comprenant l'étape consistant à commuter des convertisseurs de puissance électrique entre l'au moins un port d'échange d'énergie (5) pour échanger de l'énergie avec une source de puissance et des ports respectifs d'échange d'énergie avec des véhicules électriques, pour échanger de l'énergie électrique avec les véhicules respectifs, chaque véhicule étant selon des paramètres d'échange d'énergie spécifiques, la station d'échange d'énergie (2) étant configurée pour fournir des informations de véhicule au dispositif de traitement de données concernant un véhicule couplé au port (4) d'échange d'énergie avec un véhicule ;
**caractérisé en ce que** :
∘ si aucune information de véhicule n'est présente, la station d'échange d'énergie (2) est configurée pour réaliser un test sur le véhicule ou sur une batterie de celui-ci pour déterminer des caractéristiques comme une tension de batterie, une résistance interne de batterie ou une courbe de chargement ; et
∘ la station d'échange d'énergie (2) comprenant une matrice de connexion (707) pour coupler de manière changeable les convertisseurs d'énergie à des ports (4) d'échange d'énergie avec des véhicules.
